# EUROPEAN PATENT APPLICATION

(11) **EP 1 637 042 A1**
(43) Date of publication of application: **22.03.2006**
(21) Application number: 04746026.6
(22) Date of filing: 10.06.2004
(51) Int. Cl.: A23L 1/221, A23L 1/227, A23J 3/06, A23J 3/34

(54) **SEASONING**

(30) Priority: 10.06.2003 JP 2003164747
(71) Applicant: Kyowa Hakko Food Specialties Co., Ltd., Tokyo 100-8185 (JP)
(72) Inventor: YAMADA, Yuki c/o Kyowa FD Foods Co., Ltd., Yamaguchi 747-0825 (JP); OGASAWARA, Masashi c/o Food Cr. C. Kyowa Hakko Fd, Ibaraki 300-0398 (JP); HIROKI, Kaoru c/o Food Creat. C. Kyowa Hakko Fd. S, Tokyo 103-8503 (JP); SAITOH, Chiaki c/o Hd. Off. Kyowa Hakko Fd. Spec., Tokyo, 100-8185 (JP)
(74) Representative: Harding, Charles Thomas
(86) International application number: PCT/JP2004/008498
(87) International publication number: WO 2004/107880

(57) **Abstract**

The present invention relates to a body taste enhancer and a seasoning for food or drink which comprises a peptide having glycine and L-proline as the first and the second amino acids from the N-terminal, respectively, and having a molecular weight of 1000 or less, for example, a peptide consisting of an amino acid sequence represented by Gly-Pro-3Hyp, Gly-Pro-4Hyp, or Gly-Pro-Ala, as an active ingredient, and a method of enhancing body taste of food or drink which is **characterized by** adding the peptide; body taste enhancer or seasoning.

## Description

### Technical Field

The present invention relates to a body taste enhancer, a seasoning and a method of enhancing body taste of food or drink.

### Background Art

Basic tastes are the most basic elements that represent the quality of taste, and physiologically mean five tastes, that is, sweetness, saltiness, sourness, bitterness and *umami* [Maruzen Shokuhin Sogo Jiten, Maruzen, p.280, (1998)].

In addition to basic tastes, there is body taste (in Japanese, "kokumi"). Body taste means *umami* with continuity, preferably having thickness and mouthfullness imparted thereto.

Although *umami* seasonings and natural seasonings such as yeast extract, protein hydrolyzate, fish and shell extract and meat extract can impart *umami* and other basic tastes, they can hardly impart sufficient body taste.

For imparting "body taste" to food or drink, the known methods include those comprising addition of pyrazine compounds (Japanese Published Unexamined Patent Application No. 313635/99), glutathione [Bioscience Biotechnology Biochemistry, 61, 1977-1980 (1997)], sulfone group-containing compounds, phosphates and betaine (Japanese Published Unexamined Patent Application No. 289761/96), an enzymatic hydrolysate of gelatin and tropomyosin (Japanese Published Unexamined Patent Application No. 228715/96), an O/W emulsified composition (Japanese Published Unexamined Patent Application No. 179026/98), an amino-carbonyl reactant of a peptide having a molecular weight of 1000 to 5000 with a carbonyl compound (Japanese Published Unexamined Patent Application No. 2002-335904) and the like.

Peptides are known as a gustatory compound, and reportedly, there are peptides having sweetness, bitterness, saltiness, or *umami*. For example, known peptides having *umami* include acidic peptides having a molecular weight of 1000 or less obtained by enzymatic degradation of fish protein, which consist of an amino acid sequence represented by Glu-Asp, Thr-Glu, Glu-Ser, Glu-Glu, Glu-Asp-Glu, Asp-Glu-Ser, Glu-Gly-Ser, Ser-Glu-Glu and Glu-Gln-Glu [Journal of Agricultural & Food Chemistry, 23, 49-53 (1975)].

Additionally, peptides are known to have an action to alter the intensity of basic tastes, thereby changing the taste. More specifically, peptides having an action to suppress the sweetness, an action to suppress the bitterness, an action to suppress the sourness and an action to enhance *umami* have been known. For example, peptides having an action to enhance *umami* are reported, such as peptides consisting of an amino acid sequence represented by Glu-Glu, Glu-Val, Ala-Asp-Glu, Ala-Glu-Asp, Asp-Glu-Glu or Ser-Pro-Glu in a hydrolysate obtained by treating a chicken protein with protease or bromelain (Journal of Agricultural & Food Chemistry, 50, 1515-1522 (2002)).

In addition, peptides are known to have an action to impart body taste (Japanese Published Unexamined Patent Application No. 84050/93). Examples of such peptides include glutathione [Bioscience Biotechnology Biochemistry, 61, 1977-1980 (1997)], however, since glutathione is liable to form a dimer through heating, there are problems such as the function of peptides impart body taste is easily deteriorated.

Because peptides exert a variety of influences on tastes of food or drink, development of a peptide capable of efficiently enhancing body taste of food or drink has been desired.

### Disclosure of the Invention

An object of the present invention is to provide a body taste enhancer, a seasoning and a method of enhancing body taste.

The present invention relates to the following (1) to (17).
(1) A body taste enhancer for food or drink comprising a peptide having glycine and L-proline as the first and the second amino acids from the N-terminal, respectively, and having a molecular weight of 1000 or less, as an active ingredient.
(2) The body taste enhancer according to the above (1) wherein the peptide consists of amino acids of 3, 6 or 9 residues.
(3) The body taste enhancer according to the above (1) or (2) wherein the third amino acid from the N-terminal of the peptide is L-hydroxyproline or L-alanine.
(4) The body taste enhancer according to any one of the above (1) to (3) wherein one-third or more of the amino acids constituting the peptide is glycine.
(5) The body taste enhancer according to any one of the above (1) to (4) wherein the peptide consists of an amino acid sequence represented by Gly-Pro-3Hyp, Gly-Pro-4Hyp, or Gly-Pro-Ala.
(6) A food or drink comprising the body taste enhancer according to any one of the above (1) to (5) added thereto.
(7) A seasoning comprising a peptide having glycine and L-proline as the first and the second amino acids from the N-terminal, respectively, and having a molecular weight of 1000 or less, as an active ingredient.
(8) The seasoning according to the above (7) wherein the peptide consists of amino acids of 3, 6 or 9 residues.
(9) The seasoning according to the above (7) or (8) wherein the third amino acid from the N-terminal of the peptide is L-hydroxyproline or L-alanine.
(10) The seasoning according to any one of the above (7) to (9) wherein one-third or more of the amino acids constituting the peptide is glycine.
(11) The seasoning according to any one of the above (7) to (10) wherein the peptide consists of an amino acid sequence represented by Gly-Pro-3Hyp, Gly-Pro-4Hyp, or Gly-Pro-Ala.
(12) A food or drink comprising the seasoning according to any one of the above (7) to (11) added thereto.
(13) A method of enhancing body taste of food or drink, which comprises adding a peptide having glycine and L-proline as the first and the second amino acids from the N-terminal, respectively, and having a molecular weight of 1000 or less, as an active ingredient, to food or drink.
(14) The method according to the above (13) wherein the peptide consists of amino acids of 3, 6 or 9 residues.
(15) The method according to the above (13) or (14) wherein the third amino acid from the N-terminal of the peptide is L-hydroxyproline or L-alanine.
(16) The method according to any one of the above (13) to (15) wherein one-third or more of the amino acids constituting the peptide is glycine.
(17) The method according to any one of the above (13) to (16) wherein the peptide consists of an amino acid sequence represented by Gly-Pro-3Hyp, Gly-Pro-4Hyp, or Gly-Pro-Ala.

The peptide used in the present invention (hereinafter, referred to as "peptide of the present invention") may be any peptide as long as it has glycine (Gly) and L-proline (L-Pro) as the first and the second amino acids from the N-terminal, respectively, and having a molecular weight of 1000 or less.

The number of amino acids constituting the peptide is not particularly limited, but is preferably 3, 6 or 9 residues.

The amino acid constituting the peptide is not particularly limited, but it is preferred that one-third or more of the amino acids constituting the peptide is glycine.

Examples of the peptide of the present invention include peptides having L-hydroxyproline or L-alanine (L-Ala) as the third amino acid from the N-terminal, and having a molecular weight of 1000 or less.

In the peptide of the present invention, L-hydroxyproline may be any one of 3-hydroxy-L-proline (3Hyp), 4-hydroxy-L-proline (4Hyp) and 5-hydroxy-L-proline (5Hyp).

Examples of the peptide of the present invention include peptides consisting of an amino acid sequence such as Gly-Pro-Xaa, Gly-Pro-Xaa-Gly-Xaa-Xaa and Gly-Pro-Xaa-Gly-Xaa-Xaa-Gly-Xaa-Xaa represented by SEQ ID NO: 1 (wherein Xaa represents an arbitrary amino acid). Specific examples include peptides having the amino acid sequence represented by Gly-Pro-3Hyp, Gly-Pro-4Hyp or Gly-Pro-Ala, but not limited thereto.

The peptide of the present invention may be obtained by synthesizing peptide using a peptide synthesizer or the like, but may also be obtained by fractionating a fraction of a molecular weight of 1000 or less of hydrolysates obtained by hydrolyzing collagen or gelatin with a protein hydrolase(hereinafter, refered to as protease) using a method capable of fractionating a peptide based on the molecular weight such as ultrafiltration, gel electrophoresis, gel filtration chromatography and ultracentrifugation, preferably ultrafiltration or gel filtration chromatography.

As the protease, any enzyme can be used so long as it can hydrolyze a protein. Examples thereof include endopeptidase and exopeptidase, and endopeptidase is preferably used. Examples of the endopeptidase include serine protease such as trypsin, chymotrypsin and subtilisin, thiol protease such as papain, bromelain and ficin, metal protease such as thermolysin and collagenase.

These proteases may be used alone, or in combination of two or more thereof.

The protease may be any one described above, but one which can cleave a peptide bond in between Xaa-Gly (wherein Xaa represents an arbitrary amino acid) of Xaa-Gly that is present in an amino acid sequence constituting collagen or gelatin, preferably a peptide bond in between Xaa-Gly (wherein Xaa represents an arbitrary amino acid) of Xaa-Gly-Pro is preferably used. Examples of such a protease include collagenase and the like.

Examples of collagenase include those derived from microorganisms such as Clostridium histolyticum, Streptomyces parvulus and Achromobacter iophagus, and collagenase derived from a vertebrate, and the like. Collagenase derived from microorganisms is preferably used, and collagenase derived from Clostridium histolyticum is more preferably used.

There are two types of gelatin, one is obtained by treating collagen with acid (type A) and the other by treating collagen with alkali (type B), and either type may be used.

As for collagen or gelatin which are prepared from bone, skin, tendon, cartilage, skeletal muscle or the like of an animal such as cattle or pig by the conventional method can be used, as well as commercially available ones.

When collagen or gelatin is hydrolyzed in an aqueous medium with collagenase, preferably, collagenase derived from Clostridium histolyticum, a peptide consisting of an amino acid sequence such as Gly-Pro-Xaa, Gly-Pro-Xaa-Gly-Xaa-Xaa and Gly-Pro-Xaa-Gly-Xaa-Xaa-Gly-Xaa-Xaa represented by SEQ ID NO: 1 (wherein Xaa represents an arbitrary amino acid) can be formed and accumulated in the aqueous medium.

As for the protease, a commercially available purified product may be used, as well as a partially purified or purified enzyme from a cell of a microorganism, animal, plant or the like having the protease activity according to common purification method of an enzyme.

Alternatively, culture of cells having the protease activity, cells obtained by solid-liquid separation of the culture of the cells by filtration, centrifugal separation or the like, or treated matters of the cells may be used as the protease. Examples of the treated matter of the cells include concentrated or dried matters of the culture of the cells obtained by concentrating or drying the culture of the cells having the protease activity with a concentrator or drier, dried matters of the cells obtained by drying the cells with a drier or the like,treated matters of the cells obtained by treating the cells with a surfactant and/or an organic solvent, a treated matters of the cells obtained by treating the cells with a lytic enzyme such as lysozyme, immobilized matters of the cell, and the like.

Any aqueous medium may be used as long as the protease can hydrolyze collagen or gelatin therein, and examples thereof include water, various types of buffers and the like. Aqueous medium may include other component, for example, an amino acid, a metal ion, an organic acid or the like as long as the protein hydrolysis reaction is not inhibited. Furthermore, a culture of the cells having the protease activity, a supernatant obtained by removing cells from the culture can be also used as the aqueous medium.

Amount of the protease to be used is not particularly limited because it may vary depending on the types or the like of the collagen or gelatin, but is preferably 0.05 to 8 parts by weight, more preferably 0.1 to 6 parts by weight, and still more preferably 0 . 5 to 4 parts by weight, per 100 parts by weight of collagen or gelatin.

As to the pH, the reaction temperature and the like for the hydrolysis of collagen or gelatin with the protease, the optimum conditions for the enzyme used or conditions similar thereto may be appropriately selected.

For adjusting the pH, an acid or an alkali that is acceptable for use in food or drink may be used. Examples of the acid include inorganic acids and organic acids. Examples of the inorganic acid include hydrochloric acid, phosphoric acid and the like, while examples of the organic acid include acetic acid, lactic acid, citric acid and the like. Examples of the alkali include sodium hydroxide, potassium hydroxide, aqueous ammonia and the like.

The treatment time of hydrolysis of collagen or gelatin with a protease may vary depending on various conditions such as the amount of the protease used, the temperature and the pH, but is preferably 1 to 100 hours, and more preferably 1 to 72 hours.

After the completion of the hydrolysis with the protease, the resultant liquid obtained by hydrolysis may be directly subjected to the subsequent treatment, or may be subjected to the subsequent treatment after inactivating the enzyme by heat treatment, acid treatment or the like.

The resultant liquid obtained by hydrolysis may be fractionated by a known method which can fractionate based on the molecular weight such as ultrafiltration, gel electrophoresis, gel filtration chromatography and ultracentrifugation to collect a fraction comprising the peptide having a molecular weight of 1000 or less.

The peptide of the present invention included in the fraction comprising the peptide having a molecular weight of 1000 or less can also be purified by fractionating and collecting the fraction comprising the peptide having a molecular weight of 1000 or less according to common purification method of a protein utilizing difference in electric charge, polarity, molecular weight, specificity or the like of each peptide included in the fraction.

Examples of the method of purification based on the difference in electric charge include methods such as ionic exchange chromatography, electrophoresis and isoelectric focusing.

Examples of the method of purification based on the difference in polarity include methods such as adsorption chromatography, filter paper chromatography, reverse phase chromatography and hydrophobic interaction chromatography.

Examples of the method of purification based on the difference in molecular weight include methods such as ultrafiltration, gel electrophoresis, gel filtration chromatography and ultracentrifugation.

Examples of the method of purification based on the difference in specificity include methods such as affinity chromatography.

Any one of the methods described above may be used, but a method of utilizing the difference in molecular weight or polarity is preferably used; a method of utilizing the difference in polarity is more preferably used; and reverse phase chromatography is still more preferably used.

Whether or not the first and the second amino acids from the N-terminal of the peptide of the present invention are glycine and L-proline, respectively, can be determined according to the following method. It can be determined by using a peptide synthesized by a peptide synthesizer to have glycine and L-proline as the first and the second amino acids from the N-terminal, respectively, and to have the molecular weight of 1000 or less, or a commercially available peptide having such a sequence and molecular weight, as a standard substance, the peptide is determined by subjecting to a similar process which was employed to purify the peptide of the present invention, and identify whether or not each peptide is fractionated into the same fraction as the standard substance.

Moreover, the amount of thus identified peptide of the present invention can be determined by comparing with the amount of the standard substance in the fraction corresponding to the fraction in which the purified peptide is present.

The resultant liquid obtained by hydrolysis of collagen or gelatin with a protease, or a solution comprising the peptide of the present invention obtained by collecting from the liquid may be added to food or drink, or used as the body taste enhancer of the present invention or the seasoning of the present invention as it is in the form of a solution comprising the peptide of the present invention. The treated matter of the solution may be added to food or drink, or may be used for the body taste enhancer of the present invention or the seasoning of the present invention. Examples of the treated matter of the solution include liquids such as decolorized liquid obtained by treating the solution with active carbon and the like for decolorization, and concentrated liquid obtained by treating the solution under reduced pressure for concentration, and solid matters, powder and the like obtained by treating the liquid by drying under reduced pressure or spray drying.

Addition of the solution comprising the peptide of the present invention, the treated matter of the solution, the peptide of the present invention obtained by purification from the solution, or the body taste enhancer of the present invention or seasoning of the present invention obtained by using the same, to food or drink allows to impart continuity to *umami* of the food or drink, and enhance the body taste of the food or drink.

The body taste referred to herein means *umami* with continuity, preferably having thickness and mouthfullness imparted thereto.

*Umami* includes tastes imparted by *umami* substances either alone or plurally. Examples of the *umami* substance include sodium glutamate, aspartic acid, oxyglutamic acid, ibotenic acid, tricholomic acid, sodium inosinate, sodium guanylate, sodium succinate and the like, and in particular, *umami* imparted by sodium glutamate is preferred.

Except for using the peptide of the present invention, the method of enhancing body taste of food or drink according to the present invention is not particularly limited, but any method generally used for seasoning food or drink may be used.

Examples of the method of enhancing body taste of a food or drink according to the present invention include, methods which comprise adding a solution containing the peptide of the present invention, a treated matter of the solution, or the peptide of the present invention obtained by purification from the solution as it is, or adding the body taste enhancer of the present invention or the seasoning of the present invention, as a part of the raw materials of a food or drink when the food or drink is produced, and a method which comprises adding the same when a food or drink in the form of a manufactured product is cooked by heating, microwave cooking or vacuum cooking, or is taken.

The food or drink to which the method of enhancing body taste of a food or drink according to the present invention is applicable may be any one of foods or drinks. Examples of the food or drink include seasonings such as *miso* or soybean paste, soy sauce, dips, stocks, dressings, mayonnaise and tomato ketchup, soups such as Japanese clear soup, consomme soup, egg soup, wakame seaweed soup, shark's fin soup, pottage and miso soup, soups and sauces for noodles (buckwheat noodle, Japanese wheat noodle, Chinese noodle, pasta, etc.), cooked rice products such as rice gruel, porridge of rice and vegetables and rice with hot tea or hot water poured on it, processed livestock products such as ham, sausages and cheese, processed marine products such as steamed fish paste, dried marine products, salted and fermented fish products and food delicacies, processed vegetable products such as pickles, snacks such as potato chips, rice crackers and cookies, and cooked foods such as boiled, fried and baked foods, curry and stew. Examples of suitable food or drink include those obtained using meats as a raw material, such as curry, stew, hamburg steak and Chinese noodle with a soup of pig bone (*tonkotsu-ramen*).

The body taste enhancer of the present invention comprises the peptide of the present invention, and may contain, if necessary, various additives usable for food or drink, such as inorganic acids, organic acids, amino acids, nucleic acids, sugars, seasonings, spices and excipients.

Examples of the inorganic acid include common salt, potassium chloride, ammonium chloride and the like.

Examples of the organic acid include carboxylic acids such as ascorbic acid, fumaric acid, malic acid, tartaric acid, citric acid and fatty acid, and salts thereof. Examples of the salt include sodium and potassium salts.

Examples of the amino acid include sodium glutamate, glycine and the like.

Examples of the nucleic acid include sodium inosinate, sodium guanylate and the like.

Examples of the sugar include sucrose, glucose, lactose and the like.

Examples of the seasoning include natural seasonings such as soy sauce, *miso* or soybean paste and extracts, and examples of the spice may include a variety of spices.

Examples of the excipient include dextrin, i.e., a starch hydrolyzate, various starches and the like.

The amount of these additives used herein may be appropriately determined depending on the intended use. For example, they may be used in an amount of 0.1 to 500 parts by weight per 100 parts by weight of the peptide of the present invention.

The seasoning of the present invention comprises the peptide of the present invention and the *umami* substance, and may comprise various additives usable for a food or drink, such as inorganic acids, organic acids, amino acids, nucleic acids, sugars, seasonings, spices and excipients as described above, if necessary.

The seasoning of the present invention may be suitably used as a seasoning for enhancing body taste.

Except for being comprised of the peptide of the present invention and, if necessary, the *umami* substance, the body taste enhancer of the present invention or the seasoning of the present invention can also be prepared using ordinary processes for producing seasonings.

According to the seasoning of the present invention, to enhance *umami* or body taste of an *umami* substance, for example, sodium glutamate, it is preferred to blend 0.01 to 50 parts by weight of the peptide of the present invention per 100 parts by weight of sodium glutamate.

The body taste enhancer of the present invention or the seasoning of the present invention may take any forms such as liquid, powder and granule.

Content of the peptide of the present invention in the body taste enhancer or seasoning of the present invention is not particularly limited, but the peptide may be included 0.01 part by weight to 100 parts by weight, and preferably 0.05 to 100 parts by weight per 100 parts by weight of the body taste enhancer or seasoning of the present invention.

The content of the peptide of the present invention in the body taste enhancer or seasoning of the present invention can be determined by a similar method to that of quantitatively determining the peptide of the present invention in a peptide solution having a molecular weight of 1000 or less as described above.

A solution comprising the peptide of the present invention, a treated matter of the solution, the peptide of the present invention obtained by purification from the solution, the body taste enhancer or seasoning of the present invention obtained through using the same may be added while food or drink is produced or cooked, or alternatively, may be added to a produced or cooked food or drink.

Amount of a solution comprising the peptide of the present invention, a treated matter of the solution, the peptide of the present invention obtained by purifying the solution, the body taste enhancer of the present invention or seasoning of the present invention obtained by using the same, to be used in a food or drink is preferably adjusted so that the peptide of the present invention is added in an amount of 1 x 10⁻⁴ to 2 parts by weight, and more preferably 1 x 10⁻³ to 1 part by weight per 1000 parts of the food or drink.

Examples of the present invention are shown below. Best Modes for Carrying out the Invention

### Example 1

(a) Swine gelatin (manufactured by SIGMA) in an amount of 50 g was dispersed in 1000 ml of distilled water, heated to 37°C to dissolve gelatin, and kept at 37°C. To the gelatin solution was added 250 mg of collagenase (EC 3.4.24.3 derived from Clostridium histolyticum, manufactured by Nacalai Tesque, Inc.), which was dissolved. The pH of the mixture was adjusted to 7.4 using sodium hydroxide, and the mixture was allowed to react at 37°C for 2 hours. After completing the reaction, the reaction mixture was heated at 100°C for 10 minutes to inactivate the collagenase. The reaction mixture was centrifuged at 5000 rpm for 10 minutes, and the resulting supernatant was filtrated to obtain a filtrate as a solution of gelatin decomposed with collagenase. Thus resulting solution of gelatin decomposed with collagenase in a volume of 1000 ml was freeze-dried to obtain about 50 g of freeze-dried powder.
On the other hand, 50 g of swine gelatin (manufactured by SIGMA) was dispersed in 1000 ml of distilled water, heated to 37°C to dissolve gelatin, and kept at 37°C. To the gelatin solution was added 250 mg of pepsin A (EC 3.4.23.1, manufactured by Wako Pure Chemical Industries, Ltd.), which was dissolved. The pH of the mixture was adjusted to 2.0 using hydrochloric acid, and the mixture was allowed to react at 37°C for 2 hours. After completing the reaction, the reaction mixture was heated at 100°C for 10 minutes to inactivate the pepsin. The reaction mixture was centrifuged at 5000 rpm for 10 minutes, and the resulting supernatant was filtrated to obtain a filtrate as a solution of gelatin decomposed with pepsin. Thus resulting solution of gelatin decomposed with pepsin in a volume of 1000 ml was freeze-dried to obtain about 50 g of freeze-dried powder.
A solution in a volume of 200 ml obtained by dissolving 10 g of the freeze-dried powder of the solution of gelatin decomposed with collagenase in 200 ml of water was ultrafiltrated using an ultrafiltration membrane(manufactured by Millipore Corporation) to obtain about 200 ml of a fraction comprising peptides having a molecular weight of 1000 or less (hereinafter, abbreviated as fraction A), and a fraction containing peptides having a molecular weight of 1000 or greater (hereinafter, abbreviated as fraction B). Similarly, 200 ml of a solution obtained by dissolving 10 g of the freeze-dried powder of the solution of gelatin decomposed with pepsin in 200 ml of water was ultrafiltrated to obtain about 200 ml of a fraction comprising peptides having a molecular weight of 1000 or less (hereinafter, abbreviated as fraction C), and a fraction comprising peptides having a molecular weight of 1000 or greater (hereinafter, abbreviated as fraction D).
The fractions A to D were freeze-dried to obtain 6.9 g, 2.8 g, 1.9 g and 7.8 g of freeze-dried powder, respectively. In the following experiments, the freeze-dried powder was used.
Total nitrogen content in the fraction A and fraction B was measured using an automated nitrogen analyzer (manufactured by ThermoFinnigan) according to the Dumas principle. Then amount of protein in the fraction A was calculated by multiplying the total nitrogen content by 6.25. On the other hand, amount of free amino acid in the fraction A was quantitatively determined using an amino acid analyzer (manufactured by JEOL DATUM Ltd.).
As a result of subtracting the amount of free amino acid from the amount of protein in the fraction A, the amount of the peptide having a molecular weight of 1000 or less in the freeze-dried powder of the fraction A was calculated to be 6.9 g.
Similarly, the amount of the peptide having a molecular weight of 1000 or less in the freeze-dried powder of the fraction C was calculated to be 1.9 g.
The freeze-dried powder of the fractions A to D was dissolved in an appropriate amount of water, respectively, and 10 µl of each solution was subjected to a liquid chromatography/mass spectrometer.
Column for liquid chromatography employed was Inertsil C8-3 (manufactured by GL Sciences Inc.). The peptides were separated by elution with concentration gradient using a mobile phase of a 0.02% (w/v) aqueous trifluoroacetic acid solution and a 0.02% (w/v) trifluoroacetic acid solution in acetonitrile, at a flow rate of 0.2 ml/minute for 100 minutes. Detection and determination were carried out using LCQ Advantage (manufactured by Thermo Electron K.K.). Ionization conditions were as described below:
Capillary temperature: 250°C
Sheath Gas: nitrogen, flow rate: 40 arb
Auxiliary gas (AUX. Gas): helium, flow rate: 10 arb
Spray voltage: 4.5 kv.

Quantitative determination was performed by selected ion monitoring (SIM) in positive mode using a peptide consisting of an amino acid sequence of Gly-Pro-4Hyp (manufactured by Bachem) and a peptide consisting of an amino acid sequence of Gly-Pro-Ala (manufactured by Bachem) as a standard substance, (molecular weight: 244.3 and 286.3).
As a result of the analysis, it was demonstrated that 5.9% (W/W) of Gly-Pro-4Hyp and 1.8% (W/W) of Gly-Pro-Ala were respectively included in the freeze-dried powder of the fraction A. In the fractions B to D, both Gly-Pro-4Hyp and Gly-Pro-Ala were not detected.
(b) To 40 g of a cream soup premix comprising 44.6% (W/W) of white roux (manufactured by Hachi Foods Co., Ltd.), 3.5% (W/W) of salt, 5.1% (W/W) of granulated sugar, 11.0% (W/W) of powdered fat and oil (manufactured by UEDA OILS AND FATS MFG CO., LTD.), 7.1% (W/W) of powdered butter (manufactured by SANKYO FOODS INDUSTRY CORP.), 7.1% (W/W) of cheese powder (manufactured by Rokko Butter Co. , LTD.), 8.1% (W/W) of skimmed milk powder (YOTSUBA Inc.), 5.1% (W/W) of waxy corn starch (manufactured by NIPPON STARCH CHEMICAL CO. , LTD.), 2.5% (W/W) of sodium glutamate (manufactured by Kyowa Hakko Kogyo Co., Ltd.), 0.1% (W/W) of 5'-ribonucleotide (manufactured by Kyowa Hakko Kogyo Co., Ltd.), 3.5% (W/W) of chicken bouillon (manufactured by Kyowa Hakko Kogyo Co., Ltd.), 0.1% (W/W) of white pepper (manufactured by Kaneka Sun Spice Co. , Ltd.), 0.2% (W/W) of Laurel powder (manufactured by Kaneka Sun Spice Co., Ltd.) and 2.0% (W/W) of powder of vegetable extract (manufactured by Kyowa Hakko Kogyo Co., Ltd.) was added hot water to make the total volume of 1000 ml. Thus, a cream soup was prepared.
To 100 ml of this cream soup was added 200 mg of the freeze-dried powder of the solution of gelatin decomposed with collagenase, or 200 mg of the freeze-dried powder of the solution of gelatin decomposed with pepsin obtained in (a) above to prepare cream soups which were referred to as soup 1 and soup 2, respectively. A sensory test with respect to flavor was conducted on the soup 1 and the soup 2 by a panel consisting of well-trained 15 members.
For the test, two point evaluation was carried out through heating the soup 1 and the soup 2 to 50 to 60°C, putting each of them into mouth, comparing "continuity of *umami*", "thickness and mouthfullness" and "body taste" accomplished as an integrated factor thereof between the soup 1 and the soup 2, respectively, and selecting one concluded to evoke a stronger sensation.
The results are shown in Table 1. The number indicates number of the members.

**Table 1**

| | Continuity of *umami* | Thickness and mouthfullness | Body taste |
|---|---|---|---|
| Soup 1 | 13 | 14 | 13 |
| Soup 2 | 2 | 1 | 2 |

As is clear from Table 1, the cream soup to which the freeze-dried powder of the solution of gelatin decomposed with collagenase was added (soup 1) apparently evoked stronger "continuity of *umami*" and "thickness and mouthfullness" compared to the cream soup to which the freeze-dried powder of the solution of gelatin decomposed with pepsin was added (soup 2), and the "body taste" evoked as integrated factor thereof was also strong.
(c) In a similar manner to the above (b) except that the additive shown in Table 2 was added in an amount shown in Table 2 in stead of addition of the freeze-dried powder of the solution of gelatin decomposed with collagenase or the freeze-dried powder of the solution of gelatin decomposed with pepsin, the sensory test was conducted.

In table 2, any one of the peptide consisting of an amino acid sequence represented by Gly-Pro-4Hyp, the peptide consisting of an amino acid sequence represented by Gly-Pro-Ala, the peptide consisting of an amino acid sequence represented by or Gly-Gly-Gly used was manufactured by Bachem.

**Table 2**

| Test section | Additive | Amount of addition |
|---|---|---|
| 1 | None | - |

| Fraction A | | |
|---|---|---|
| 2 | (molecular weight 1000 or less) | 100 mg |

| Fraction B | | |
|---|---|---|
| 3 | (molecular weight 1000 or greater) | 100 mg |
| 4 | Gly-Pro-4Hyp | 2 mg |
| 5 | Gly-Pro-Ala | 2 mg |
| 6 | Gly-Gly-Gly | 2 mg |

A sensory test with respect to "continuity of *umami*"*,* "thickness and mouthfullness" and "body taste" exhibited as integrated factor was conducted on the cream soup by a panel consisting of well-trained 15 members, with a cream soup to which nothing was added as a control. Evaluation was made by giving point 3 to the "continuity of *umami*"*,* "thickness and mouthfullness" and "body taste" of the control, respectively, point 2 to the case in which somewhat weaker sensation than the control was evoked, and point 1 to the case in which weaker sensation than the case of point 2 was evoked. When stronger than the control, evaluation was made giving point 4 to somewhat stronger case, point 5 to the case stronger than the case of point 4, point 6 to the case stronger than the case of point 5, and point 7 to the case stronger than the case of point 6.

Average of scores by the 15 members was determined for the "continuity of *umami*", "thickness and mouthfullness" and "body taste".

The results are shown in Table 3.

**Table 3**

| Test section | Continuity of *umami* | Thickness and mouthfullness | Body taste |
|---|---|---|---|
| 1 | 3.0 | 3.0 | 3.0 |
| 2 | 4.4* | 5.7* | 5.7* |
| 3 | 5.1* | 4.1 | 4.3 |
| 4 | 4.7* | 5.6* | 5.3* |
| 5 | 5.1* | 5.4* | 5.3* |
| 6 | 3.6 | 3.4 | 3.3 |

| | | | |
|---|---|---|---|
| * indicates having significant difference with the significance level of 1%. | | | |

As is clear from Table 3, addition of the fraction comprising the peptide having a molecular weight of 1000 or less obtained from the solution of gelatin decomposed with collagenase (fraction A, test section 2), the peptide consisting of an amino acid sequence represented by Gly-Pro-4Hyp (test section 4), or the peptide consisting of an amino acid sequence represented by Gly-Pro-Ala (test section 5) significantly enhanced the "continuity of *umami*" and "thickness and mouthfullness" of the cream soup compared to the soup to which nothing was added. Particularly, the "thickness and mouthfullness" was markedly enhanced. Also, "body taste" of the cream soup evoked as integrated factor of them was significantly enhanced.

### Industrial Applicability

According to the present invention, a body taste enhancer, a seasoning and a method of enhancing body taste of food or drink can be provided.

### "Free text of Sequence Listings"

SEQ ID NO: 1: Xaa represents any one of amino acids.

## Claims

1. A body taste enhancer for food or drink comprising a peptide having glycine and L-proline as the first and the second amino acids from the N-terminal, respectively, and having a molecular weight of 1000 or less, as an active ingredient.

2. The body taste enhancer according to claim 1 wherein the peptide consists of amino acids of 3, 6, or 9 residues.

3. The body taste enhancer according to claim 1 or 2 wherein the third amino acid from the N-terminal of the peptide is L-hydroxyproline or L-alanine.

4. The body taste enhancer according to any one of claims 1 to 3 wherein one-third or more of the amino acids constituting the peptide is glycine.

5. The body taste enhancer according to any one of claims 1 to 4 wherein the peptide consists of an amino acid sequence represented by Gly-Pro-3Hyp, Gly-Pro-4Hyp, or Gly-Pro-Ala.

6. A food or drink comprising the body taste enhancer according to any one of claims 1 to 5 added thereto.

7. A seasoning comprising a peptide having glycine and L-proline as the first and the second amino acids from the N-terminal, respectively, and having a molecular weight of 1000 or less, as an active ingredient.

8. The seasoning according to claim 7 wherein the peptide consists of amino acids of 3, 6, or 9 residues.

9. The seasoning according to claim 7 or 8 wherein the third amino acid from the N-terminal of the peptide is L-hydroxyproline or L-alanine.

10. The seasoning according to any one of claims 7 to 9 wherein one-third or more of the amino acids constituting the peptide is glycine.

11. The seasoning according to any one of claims 7 to 10 wherein the peptide consists of an amino acid sequence represented by Gly-Pro-3Hyp, Gly-Pro-4Hyp, or Gly-Pro-Ala.

12. A food or drink comprising the seasoning according to any one of claims 7 to 11 added thereto.

13. A method of enhancing body taste of a food or drink, which comprises adding a peptide having glycine and L-proline as the first and the second amino acids from the N-terminal, respectively, and having a molecular weight of 1000 or less, to the food or drink.

14. The method according to claim 13 wherein the peptide consists of amino acids of 3, 6, or 9 residues.

15. The method according to claim 13 or 14 wherein the third amino acid from the N-terminal of the peptide is L-hydroxyproline or L-alanine.

16. The method according to any one of claims 13 to 15 wherein one-third or more of the amino acids constituting the peptide is glycine.

17. The method according to any one of claims 13 to 16 wherein the peptide consists of an amino acid sequence represented by Gly-Pro-3Hyp, Gly-Pro-4Hyp, or Gly-Pro-Ala.
